# EUROPÄISCHE PATENTSCHRIFT

(11) **EP 3 225 458 B1**
(45) Veröffentlichungstag und Bekanntmachung des Hinweises auf die Patenterteilung: **12.12.2018**
(21) Anmeldenummer: 17162252.5
(22) Anmeldetag: 22.03.2017
(51) Int. Cl.: B60N 2/75

(54) **BEDIENELEMENTE IN EINER ARMLEHNENVORRICHTUNG**
CONTROL ELEMENTS IN AN ARMREST DEVICE
ÉLÉMENTS DE COMMANDE DANS UN DISPOSITIF D'ACCOUDOIR

(30) Priorität: 01.04.2016 DE 102016106030; 01.04.2016 DE 202016101747 U
(43) Veröffentlichungstag der Anmeldung: 04.10.2017
(73) Patentinhaber: GRAMMER AG, 92224 Amberg (DE)
(72) Erfinder: Klieber, Daniel, 92224 Amberg (DE); Haller, Thomas, 92289 Ursensollen (DE); Schanderl, Florian, 92521 Schwarzenfeld (DE)
(74) Vertreter: Hannke, Christian

(56) Entgegenhaltungen:
- EP-A2- 1 343 113
- FR-A3- 2 889 125
- US-B1- 6 476 794

## Beschreibung

Die Erfindung betrifft eine Armlehnenvorrichtung für Nutzfahrzeugsitze, wobei die Armlehnenvorrichtung eine Mehrzahl von ersten Bedienelementen und mindestens ein zweites Bedienelement aufweist.

Aus dem Stand der Technik sind beispielsweise Armlehnen bekannt, welche für jede Einstellmöglichkeit innerhalb der Fahrgastkabine, insbesondere für den Fahrzeugsitz, ein separates Bedienelement aufweisen. So ist beispielsweise aus dem Stand der Technik bekannt, dass für die Einstellung der Seitenspiegel, für die Sitzheizung, für die Lendenwirbelunterstützung und anderen Einstellmöglichkeiten jedes dieser Einstellmöglichkeiten ein separates Bedienelement aufweist, welche in der Fahrgastkabine in Reichweite des Fahrgastes um den Fahrgast herum angeordnet sind.

Durch diese Anordnung ist also eine Vielzahl von Bedienelementen vorgesehen, welche von einem Fahrgast betätigt werden können oder müssen, wobei die Anordnung von zahlreichen Bedienelementen innerhalb der Fahrgastkabine für einen Fahrgast verwirrend sein können und die jeweilige, aktuell gewünschte Einstellmöglichkeit nicht sofort auffindbar ist und so auch einen Fahrzeugführer ablenken kann. Aus der FR2889125 ist eine Armlehnenvorrichtung mit einer Mehrzahl von ersten und einem drehbaren zweiten Bedienelement bekannt.

Es ist demzufolge Aufgabe der vorliegenden Erfindung, die Zahl der Bedienelementezu reduzieren und eine gute Erreichbarkeit bereitzustellen, ohne dass der Fahrgast oder der Fahrzeugführer abgelenkt wird.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, eine Armlehnenvorrichtung für Nutzfahrzeugsitze bereitzustellen, wobei die Armlehnenvorrichtung eine Mehrzahl von ersten Bedienelementen und mindestens ein zweites Bedienelement aufweist, wobei mittels einer Auswahl und einer Betätigung eines der ersten Bedienelemente, welches in einer Höhenrichtung gesehen auf einer oberen Fläche der Armlehnenvorrichtung angeordnet ist, dem ausgewählten ersten Bedienelement eine Fahrzeugfunktion zuordenbar ist und mittels einer Betätigung des aufeiner seitlichen Fläche der Armlehnenvorrichtung angeordneten zweiten Bedienelements, welches mit dem ausgewählten ersten Bedienelement zumindest eine signaltechnische Verbindung aufweist, die Fahrzeugfunktion einstellbar ist.

Insbesondere kann durch die Betätigung des zweiten Bedienelementes die Empfindlichkeit der Fahrzeugfunktion eingestellt werden, wobei unter dem Begriff Empfindlichkeit das Verhältnis der Änderung der Fahrzeugfunktion zu der sie verursachenden Änderung verstanden wird, analog zu dem Begriff Empfindlichkeit wie er aus dem Bereich der Sensorik bekannt ist.

Eine Veränderung der Fahrzeugfunktion wird durch ein Betätigen eines zweiten Bedienelementes initiiert, wobei die Dauer und/oder die Häufigkeit des Betätigens des zweiten Bedienelementes die Fahrzeugfunktion entsprechend verändert. So ist es denkbar, dass bei einer dauerhaften Betätigung, also beispielsweise einem ununterbrochenen Drücken des zweiten Bedienelementes, dies erkannt wird und die Fahrzeugfunktion gemäß einer vorgegebenen oder vorgebbaren Empfindlichkeit einstellbar ist. Es ist bei einem unterbrochenen Drücken des zweiten Bedienelements, also beispielsweise einem wiederholten Drückens des zweiten Bedienelementes denkbar, dass die Fahrzeugfunktion bei jedem Drücken des zweiten Bedienelementes um einen gewissen Wert veränderbar ist. Natürlich ist auch eine Kombination von unterbrochenen und ununterbrochenen Drücken vorstellbar.

Gemäß der vorliegenden Erfindung können die wichtigsten bzw. am öftesten benutzte Fahrzeugfunktionen auf der Armlehne angeordnet und können jeweils mittels des mindestens einen zweiten Bedienelementes eingestellt werden. Durch die besondere Anordnung der Bedienelemente, der ersten Bedienelemente auf einer oberen Fläche der Armlehnenvorrichtung und der zweiten Bedienelemente auf einer seitlichen Fläche der Armlehnenvorrichtung, können die Fahrzeugfunktionen beispielsweise, je nach Anordnung der zweiten Bedienelemente, ohne großen Aufwand von einer einzelnen Hand bzw. sehr betriebssicher bedient werden.

Eine Anordnung der ersten Bedienelemente auf einer oberen Fläche oder alternativ bzw. kumulativ auf einer unteren Fläche der Armlehnenvorrichtung und eine Anordnung der zweiten Bedienelemente auf einer seitlichen Fläche der Armlehnenvorrichtung hat insbesondere den Vorteil, dass eine unbeabsichtigte Betätigung von Bedienelementen, beispielsweise durch den Ellbogen eines Fahrzeugführers, verhindert werden kann, da eine Betätigung von Bedienelementen auf zwei verschiedenen Ebenen eine derartige unbeabsichtigte Bedienung verhindert, insbesondere bei nach hinten oder zur Seite gerichteten Arbeitspositionen des Fahrzeugführers, wenn die Bedienelemente nicht im Blickfeld des Fahrers liegen. Unabhängig von der der Anordnung der ersten und/oder zweiten Bedienelemente wird der Bedienkomfort nicht eingeschränkt.

Gemäß einer besonders bevorzugten Ausführungsform können die ersten und zweiten Bedienelemente noch einfacher bedient werden, wenn das mindestens eine zweite Bedienelement auf der seitlichen Fläche der Armlehnenvorrichtung angeordnet ist, welche dem Nutzfahrzeugsitz zugewandt ist. Jeweils in Fahrzeugsitzlängsrichtung gesprochen, ist für eine rechts angeordnete Armlehnenvorrichtung, befindet sich das mindestens eine zweite Bedienelement auf der linken Seitenfläche und für eine links angeordnete Armlehnenvorrichtung befindet sich das mindestens eine zweite Bedienelement auf der rechten Seitenfläche.

Durch eine derartige Anordnung des zweiten Bedienelementes kann das zweite Bedienelement besonders einfach durch den Daumen betätigt werden, wobei die ersten Bedienelemente von den verbleibenden Fingern leicht betätigt werden können. Die Positionen der Bedienelemente sind entsprechend der grundlegenden Ausbildung einer Hand nachempfunden.

Alternativ oder kumulativ ist es gemäß einer weiteren bevorzugten Ausführungsform denkbar, dass das mindestens eine zweite Bedienelement an der seitlichen Fläche der Armlehnenvorrichtung angeordnet ist, welche von dem Fahrzeugsitz weg zeigt. Die Bedienung der zweiten Bedienelemente gemäß dieser Ausführungsform kann weiterhin einfach durchgeführt werden, jedoch nach dem die zweiten Bedienelemente auf der vom Fahrzeugsitz weg zeigenden seitlichen Fläche angeordnet sind, kann eine unbeabsichtigte Betätigung seitens des Fahrzeugführers weiter reduziertwerden.

Gemäß einer weiteren Ausführungsform ist es denkbar, dass die Positionen der ersten und/oder zweiten Bedienelemente bezüglich der Armlehnenvorrichtung veränderbar sind. So können die Bedienelemente entsprechend der Handgröße und Handausgestaltung der Hand eines Fahrgastes oder Fahrzeugführers angeordnet werden. Vorstellbar ist es, dass die Bedienelemente auf einer Schienenvorrichtung verlagerbar angeordnet sind. So können beispielsweise die Bedienelemente in ihrer Position verlagert werden. Ein weiterer Vorteil besteht darin, dass der Armauflagenkomfort weiter erhöht werden kann. Verschiebt man beispielsweise die ersten Bedienelemente von einem vorderen Bereich der Armlehne weg, so erreicht man einen deutlich höheren Komfort zur Auflage eines Ellbogens auf dem vorderen Bereich der Armlehne, insbesondere bei Lenkbewegungen.

Alternativ oder kumulativ kann der Auflagekomfort weiter erhöht werden, insbesondere bei ortsfesten ersten und/oder zweiten Bedienelementen, wenn die Bedienelemente von einer verlagerbaren Abdeckung verborgen werden können. Sind die Bedienelemente von der Abdeckung verborgen, so kann die Abdeckung ebenfalls zur Armauflage genutzt werden, ohne dass die Bedienelemente betätigt werden können. Die Abdeckung ist vorzugsweise in der Armlehnenvorrichtung integriert und kann automatisch und/oder manuell derart verlagert werden, dass eine Abdeckung der Bedienelemente erreichbar ist.

Gemäß einer besonders bevorzugten Ausführungsform können die Fahrzeugfunktionen eingestellt werden, wenn mindestens zwei zweite Bedienelemente vorgesehen sind. Besonders vorteilhaft sind die zwei zweiten Bedienelemente zumindest haptisch voneinander unterscheidbar, beispielsweise durch verschiedene Größe der Bedienelemente und/oder konkave und konvexe Ausgestaltung der Bedienelemente. Durch die haptische Unterscheidung ist es dem Bediener möglich, die jeweilige gewünschte Funktion auszuführen ohne dass der Bediener visuell überprüfen muss, ob die ausgeführte Funktion auch der gewünschten Funktion entspricht.

Gemäß einer besonders bevorzugten Ausführungsform sind die mindestens zwei zweiten Bedienelemente (3) auf einer zum Nutzfahrzeugsitz hinzeigenden seitlichen Fläche (5) und/oder auf einer vom Nutzfahrzeugsitz weg zeigenden seitlichen Fläche (5) angeordnet.

Weiter ist es vorteilhaft, zwei zweite Bedienelemente vorzusehen und das eine zweite Bedienelement mit einer Inkrement-Funktion und das andere zweite Bedienelement mit einer Dekrement-Funktion zu belegen. Bei Betätigen des zweiten Bedienelementes mit derlnkrement-Funktion wird der Wert der Fahrzeugfunktion erhöht, beispielsweise eine Blase für die Lendenwirbelstütze gefüllt. Wird das zweite Bedienelement mit der Dekrement-Funktion betätigt, so wird der Wert der Fahrzeugfunktion erniedrigt, die Blase der Lendenwirbelstütze wird geleert.

Weiter ist es vorteilhaft, wenn zumindest die ersten Bedienelemente jeweils eine Hintergrundbeleuchtung aufweisen. Besonders vorteilhaft ist die Hintergrundbeleuchtung des ersten Bedienelementes aktivierbar bei einer Betätigung des ersten Bedienelementes.

Der Bediener kann hierdurch durch einen kurzen visuellen Kontakt überprüfen, welche Fahrzeugfunktion momentan ausgewählt ist.

Weiter kann die Bedienung mittels einer Hand gemäß einer weiteren Ausführungsform noch umfangreicher gestaltet werden, wenn auf einer in Nutzfahrzeugsitzlängsrichtung gesehenen vorderen Fläche der Armlehnenvorrichtung mindestens ein drittes Bedienelement angeordnet ist. Vorteilhaft ist dem dritten Bedienelement dauerhaft eine Fahrzeugfunktion zugeordnet, beispielsweise die Höhenverstellung des Nutzfahrzeugsitzes oder der Einstellung der Dämpfung und/oder Federung des Nutzfahrzeugsitzes. Die dritten Bedienelemente können dabei bequem mit dem Zeigefinger oder dem Mittelfinger bedientwerden.

Gemäß einer weiteren bevorzugten Ausführungsform ist die Auswahl eines der ersten Bedienelemente nach einem vorgebbaren oder vorgegebenen Zeitabschnitt automatisch löschbar. Wurde entsprechend der vorliegenden Erfindung ein erstes Bedienelement ausgewählt und betätigt, so ist die zugeordnete Fahrzeugfunktion ebenso ausgewählt. Ist der Wert der Fahrzeugfunktion eingestellt worden und wird eine weitere Verstellung nicht mehr benötigt, so ist es vorteilhaft, wenn nach einem bestimmten Zeitabschnitt die Auswahl automatisch gelöscht wird. Hierdurch kann auch das Risiko einer unabsichtlichen Einstellung der Fahrzeugfunktion minimiert werden. Vorteilhaft erlischt die Auswahl nach einem Zeitabschnitt von mehreren Minuten, vorteilhafter nach einer Minute und weiter vorteilhafter nach 30 Sekunden und besonders vorteilhaft nach 10 Sekunden.

Sollte eine Hintergrundbeleuchtung vorgesehen sein, so erlischt auch die Hintergrundbeleuchtung nach dem jeweiligen Zeitabschnitt, wodurch dem Fahrzeugführer noch einmal visuell dargestellt werden kann, dass keine Fahrzeugfunktion momentan ausgewählt ist. Gemäß einer besonders bevorzugten Ausführungsform ist eine Erkennungseinrichtung vorgesehen, mittels welcher die Betätigung eines der ersten Bedienelemente erkennbar ist. Vorteilhaft erzeugt die Erkennungseinrichtung ein Signal, welches dem betätigten ersten Bedienelement zuordenbar ist.

Mittels der Erkennungseinrichtung ist es daher möglich, zu erkennen, welches erste Bedienelement betätigt wurde.

Gemäß einer weiteren Ausführungsform ist das mittels der Erkennungseinrichtung erzeugte Signal an eine Zuordnungseinrichtung übermittelbar und mittels der Zuordnungseinrichtung dem betätigten ersten Bedienelement eine Fahrzeugfunktion zuordenbar.

Entsprechend der Betätigung des ersten Bedienelementes wird diesem Bedienelement mittels der Zuordnungseinrichtung eine Fahrzeugfunktion zugeordnet. Es ist hierbei auch denkbar, dass durch eine Änderung in der Zuordnungseinrichtung einem bestimmten ersten Bedienelement eine verschiedene Fahrzeugfunktion zuzuordnen. Somit kann der Mehrzahl von ersten Bedienelementen abhängig von den Bedürfnissen und Vorstellungen des Fahrgastes oder den zur Verfügung stehenden Funktionen des Nutzfahrzeuges angepasst werden.

Gemäß einer bevorzugten Ausführungsform ist eine Steuereinrichtung vorgesehen, mittels welcher abhängig von dem betätigten ersten Bedienelement mit der zugeordneten Fahrzeugfunktion bei einer Betätigung des mindestens einen zweiten Bedienelements gemäß einer vorgebbaren oder vorgegebenen Empfindlichkeit die Fahrzeugfunktion einstellbar ist.

Gemäß einer weiteren Ausführungsform ist die Steuereinrichtung zumindest signaltechnisch mit der Zuordnungseinrichtung, dem mindestens einen zweiten Bedienelement und den jeweiligen Aktuatoren zur Einstellung der Fahrzeugfunktion verbunden.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: Armlehnenvorrichtung in einer perspektivischen Darstellung;

- Fig. 2A: Armlehnenvorrichtung gemäß Figur 1 in einer Seitenansicht;
- Fig. 2B: Armlehnenvorrichtung gemäß Figur 1 in einerDraufsicht;
- Fig. 3A: Darstellung von zweiten Bedienelementen;
- Fig. 3B: Schnitt in Breitenrichtung der Figur 3A;
- Fig. 4: mögliche Anordnungen von ersten Bedienelementen;
- Fig. 5: elektronische Schaltung.

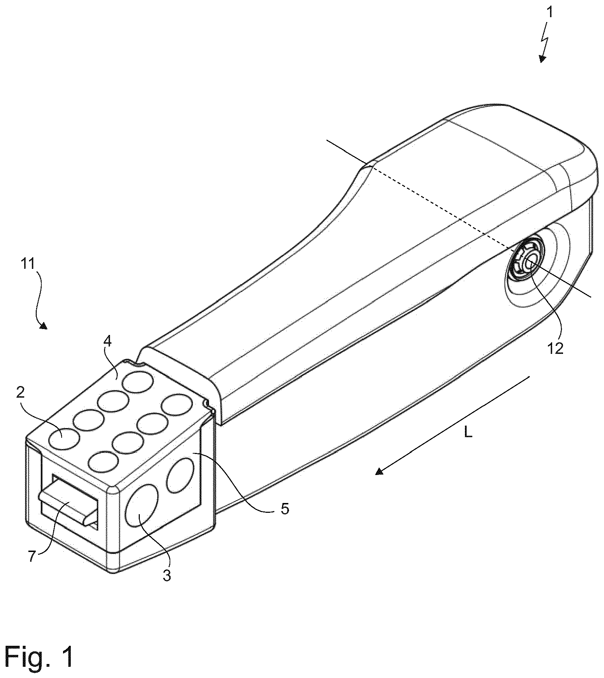

Die in der Figur 1 gezeigte Armlehnenvorrichtung 1 umfasst eine Vielzahl von ersten Bedienelementen 2, welche auf einer oberen Fläche 4 der Armlehnenvorrichtung 1 und insbesondere in Längsrichtung gesprochen in einem vorderen Bereich 11 der Armlehnenvorrichtung 1 angeordnet sind, und zwei zweite Bedienelemente 3, welche auf einer seitlichen Fläche 5 und ebenfalls in dem vorderen Bereich 11 der Armlehnenvorrichtung 1 angeordnet sind. Die Armlehnenvorrichtung 1 ist schwenkbar ausgestaltet um eine Schwenkachse 12, wobei mittels der Schwenkachse 12 die Armlehnenvorrichtung 1 beispielsweise an dem Nutzfahrzeugsitz (hier nicht gezeigt) angeordnet werden kann. Weiter umfasst die Armlehnenvorrichtung 1 ein drittes Bedienelement 7, welches auf einer in Längsrichtung gesehen vorderen Fläche 6 der Armlehnenvorrichtung 1 angeordnet ist.

Durch die in der Figur 1 gezeigten Anordnung können die ersten 2, zweiten 3 und ebenfalls die dritten Bedienelemente 7 leicht durch eine einzelne Hand bedient werden. Vorzugsweise handelt es sich bei der vorliegenden Armlehnenvorrichtung 1 um eine rechte Armlehne. Es ist jedoch auch denkbar, dass es sich bei der gezeigten Armlehnenvorrichtung 1 um eine linke Armlehne handelt. Die zweiten Bedienelemente 3 können auf einer zum Fahrzeugsitz hinzeigenden seitlichen Fläche 5 und/oder auf einer vom Fahrzeugsitz weg zeigenden seitlichen Fläche 5 angeordnet sein.

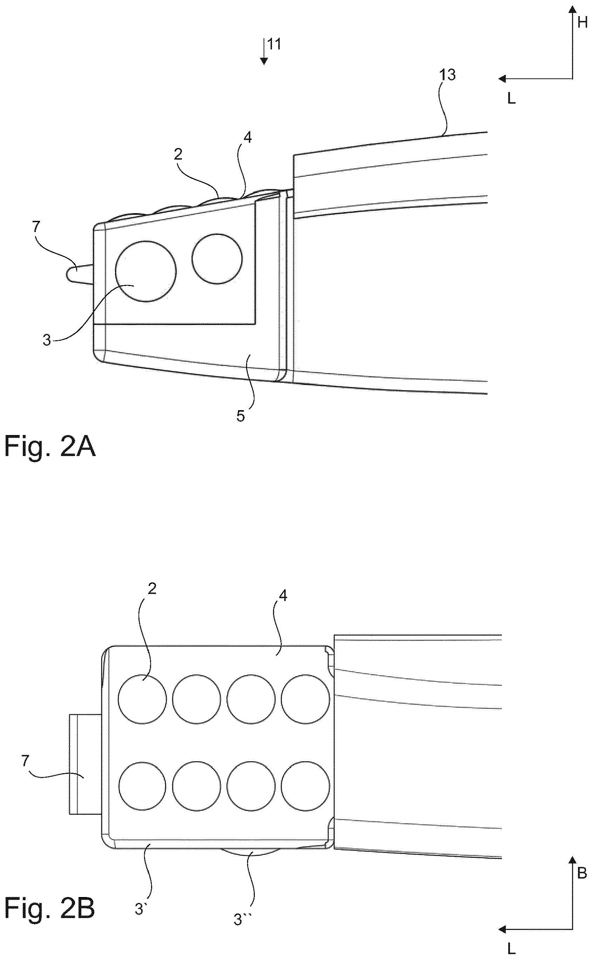

Die Figur 2A zeigt die Armlehnenvorrichtung 1 der Figur 1 in einer Seitenansicht. Hier ist auch deutlich erkennbar, dass vorliegend die obere Fläche 4 gegenüber einer Armauflagefläche 13 in Höhenrichtung H gesehen weiter abgesenkt ist. Dies unterstützt und erleichtert ebenfalls die Bedienung der Bedienelemente 2, 3, 7, da die Ausgestaltung der Armlehnenvorrichtung 1 noch näher der Ausgestaltung einer Hand angepasst ist. Wie weiter erkennbar ist, sind vorliegend die ersten Bedienelemente 2 konkav ausgebildet, so dass ein Erfühlen durch einen Bediener leichter gestaltet werden kann.

Weiter ist zu erkennen, dass die seitlich angebrachten zweiten Bedienelemente 3 haptisch unterscheidbar sind. So zeigt die Figur 2A unter anderem eine unterschiedliche Größe der zweiten Bedienelemente 3, wobei die Figur 2B, welches eine Draufsicht der Armlehnenvorrichtung 1 der Figur 1 darstellt, unter anderem zeigt, dass eines der zweiten Bedienelemente 3' konkav und das andere zweite Bedienelement 3" konvex ausgebildet ist, wodurch eine einfache, haptische Unterscheidung für den Bediener bereitstellbar ist. Es ist daher nicht nötig, dass der Bedienereine visuelle Kontrolle durchführen muss, um zu überprüfen, welche Funktion er gerade betätigt.

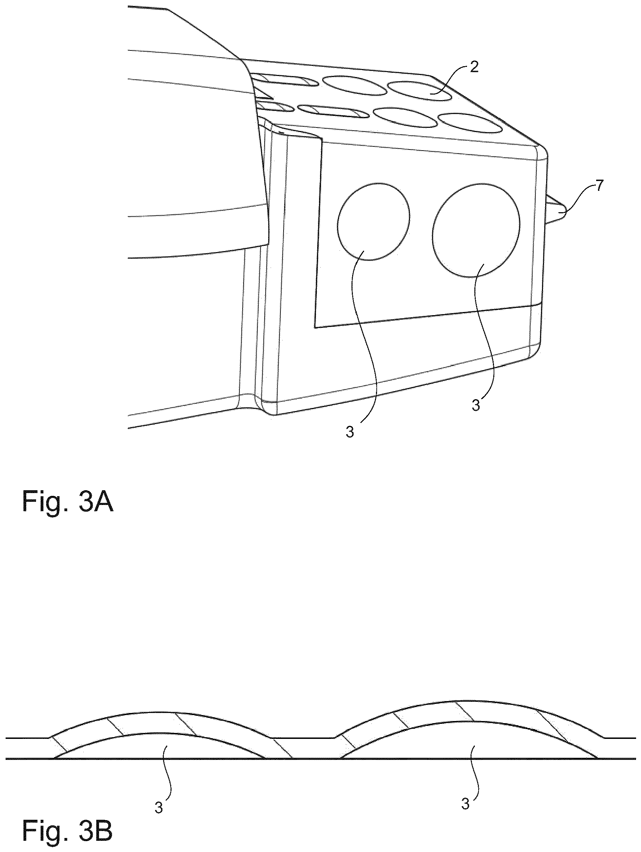

Eine andere Ausgestaltungsvariante der zweiten Bedienelemente 3 wird in den Figuren 3A und 3B dargestellt, wobei Figur 3A eine perspektivische Ansicht zeigt und die Figur3B einen Schnitt in Breitenrichtung B durch beide zweiten Bedienelemente 3.

Wie aus den Figuren zu erkennen ist, sind vorliegend beide zweiten Bedienelemente 3 konkav ausgebildet, so dass die Gefahr einer versehentlichen Benutzung weitestgehend reduziert werden kann. Zur haptischen Unterscheidung ist es vorliegend völlig ausreichend, verschiedene Größen und gegebenenfalls verschiedene erhabene Symbole aufweist, wie vorliegend dargestellt ein "+" und ein "-".

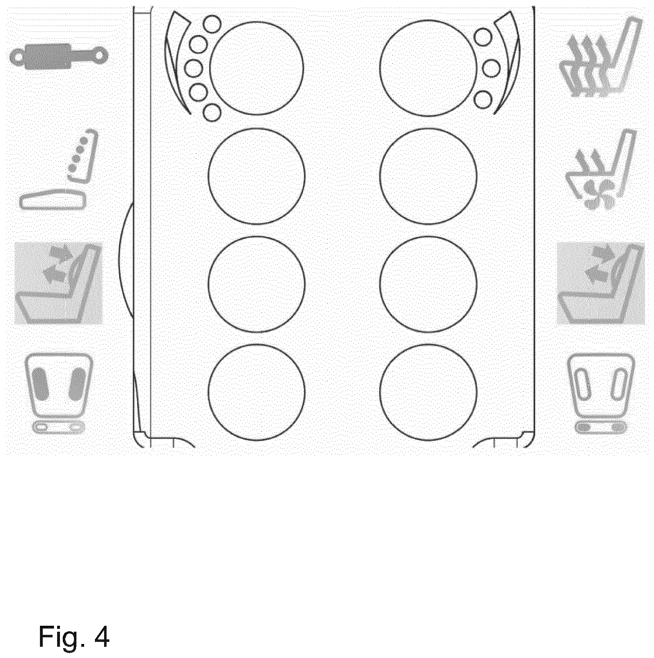

In der Figur 4 ist eine mögliche Anordnung von ersten Bedienelementen aufgezeigt, welche beginnend von links oben nach links unten und rechts oben nach rechts unten die folgenden Funktionen umfasst: Fahrmodischalter, Massagesystem, Lendenwirbelstütze obere Blase, Seitenkontur Rückenpolster, Sitzheizung, aktive Sitzklimatisierung, Lendenwirbelstütze untere Blase, Seitenkontur Sitzpolster.

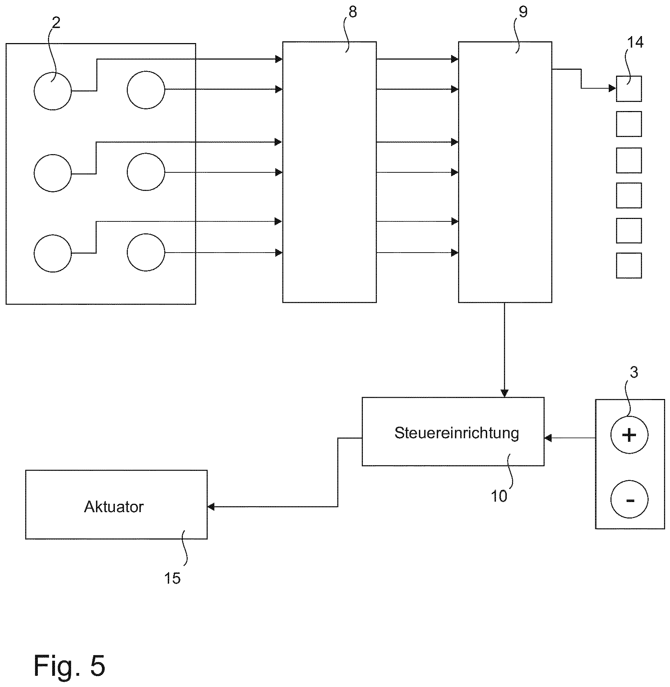

Die Figur 5 zeigt dabei eine mögliche elektronische Anordnung zum Steuern der erfindungsgemäßen Fahrzeugfunktionen 14. Betätigt ein Bediener ein erstes Bedienelement 2, so erkennt die Erkennungseinrichtung 8 diese Betätigung und erzeugt ein Signal, welches dem betätigten ersten Bedienelement 2 zugeordnet ist. Dieses Signal wird an eine Zuordnungseinrichtung 9 übermittelt, wobei mittels der Zuordnungseinrichtung 9 dem betätigten ersten Bedienelement 2 eine Fahrzeugfunktion 14 zuordenbar ist. Durch Änderung der zugrunde liegenden Zuordnungsvorschrift kann jedem ersten Bedienelement auch eine andere Fahrzeugfunktion 14 zugeordnet werden.

Weiter ist eine Steuereinrichtung 10 vorgesehen, welche mit der Zuordnungseinrichtung 9, den zweiten Bedienelementen 3 und den zugehörigen Aktuatoren 15 zumindest in signaltechnischer Verbindung steht.

Vorzugsweise umfasst die jeweilige Fahrzeugfunktion 14 auch Informationen darüber, in welcher Weise ein Aktuator 15 mittels der Steuereinrichtung angesteuert wird. Dies ist dahingehend sinnvoll, da eine Lendenwirbelstütze natürlich mit einer anderen Verstellgeschwindigkeit verstellt werden sollte als ein Massagesystem oder eine Polsterkontur, beispielsweise der Rückenlehne oder des Sitzteils.

Vorteilhaft kann das zweite Bedienelement 2 dauerhaft betätigt werden und/oder mehrfach betätigt werden. Eine Veränderung der Fahrzeugfunktion wird durch ein Betätigen eines zweiten Bedienelementes initiiert, wobei die Dauer und/oder die Häufigkeit des Betätigens des zweiten Bedienelementes die Fahrzeugfunktion entsprechend verändert. So ist es denkbar, dass bei einer dauerhaften Betätigung, also beispielsweise einem ununterbrochenen Drücken des zweiten Bedienelementes, dies erkannt wird und die Fahrzeugfunktion gemäß einer vorgegebenen oder vorgebbaren Empfindlichkeit einstellbar ist. Es ist bei einem unterbrochenen Drücken des zweiten Bedienelements, also beispielsweise einem wiederholten Drückens des zweiten Bedienelementes denkbar, dass die Fahrzeugfunktion bei jedem Drücken des zweiten Bedienelementes um einen gewissen Wert veränderbar ist. Natürlich ist auch eine Kombination von unterbrochenen und ununterbrochenen Drücken vorstellbar.

### Bezugszeichenliste

- 1: Armlehnenvorrichtung
- 2: erstes Bedienelement
- 3: zweites Bedienelement
- 4: obere Fläche
- 5: seitliche Fläche
- 6: vordere Fläche
- 7: drittes Bedienelement
- 8: Erkennungseinrichtung
- 9: Zuordnungseinrichtung
- 10: Steuereinrichtung
- 11: vorderer Bereich
- 12: Schwenkachse
- 13: Armauflagefläche
- 14: Fahrzeugfunktion
- 15: Aktuator
- B: Breitenrichtung
- L: Längsrichtung
- H: Höhenrichtung

## Patentansprüche

1. Armlehnenvorrichtung (1) für Nutzfahrzeugsitze, wobei die Armlehnenvorrichtung (1) eine Mehrzahl von ersten Bedienelementen (2) und mindestens zwei zweite Bedienelemente (3) aufweist, wobei
mittels einer Auswahl und einer Betätigung eines der ersten Bedienelemente (2), welches in einer Höhenrichtung (H) gesehen auf einer oberen Fläche (4) der Armlehnenvorrichtung (1) angeordnet ist, dem ausgewählten ersten Bedienelement (2) eine Fahrzeugfunktion (14) zuordenbar ist und mittels einer Betätigung mindestens eines auf einer seitlichen Fläche (5) der Armlehnenvorrichtung (1) angeordneten zweiten Bedienelements (3), welches mit dem ausgewählten ersten Bedienelement (2) zumindest eine signaltechnische Verbindung aufweist, die Fahrzeugfunktion (14) einstellbar ist.

2. Armlehnenvorrichtung (1) nach Anspruch 1,
**dadurch gekennzeichnet, dass**
die mindestens zwei zweiten Bedienelemente (3) an der seitlichen Fläche (5) der Armlehnenvorrichtung (1) angeordnet ist, welche zum Nutzfahrzeugsitz hinzeigt.

3. Armlehnenvorrichtung (1) nach Anspruch 1,
**dadurch gekennzeichnet, dass**
die mindestens zwei zweiten Bedienelement (3) an der seitlichen Fläche (5) der Armlehnenvorrichtung (1) angeordnet ist, welche vom Nutzfahrzeugsitz weg zeigt.

4. Armlehnenvorrichtung (1) nach Anspruch 1 oder 2 oder 3,
**dadurch gekennzeichnet, dass**
die mindestens zwei zweiten Bedienelemente (3) zumindest haptisch voneinander unterscheidbar sind.

5. Armlehnenvorrichtung (1) nach Anspruch 4,
**dadurch gekennzeichnet, dass**
die mindestens zwei zweiten Bedienelemente (3) auf einer zum Nutzfahrzeugsitz hinzeigenden seitlichen Fläche (5) und/oder auf einer vom Nutzfahrzeugsitz weg zeigenden seitlichen Fläche (5) angeordnet sind.

6. Armlehnenvorrichtung (1) nach einem der vorangegangenen Ansprüche,
**dadurch gekennzeichnet, dass**
zumindest die ersten Bedienelemente (2) jeweils eine Hintergrundbeleuchtung aufweisen, wobei bei einer Betätigung eines ersten Bedienelementes (2) die Hintergrundbeleuchtung des ersten Bedienelementes (2) aktivierbar ist.

7. Armlehnenvorrichtung (1) nach einem der vorangegangenen Ansprüche,
**dadurch gekennzeichnet, dass**
auf einer in Nutzfahrzeugsitzlängsrichtung (L) gesehenen vorderen Fläche (6) der Armlehnenvorrichtung mindestens ein drittes Bedienelement (7) angeordnet ist.

8. Armlehnenvorrichtung (1) nach einem der vorangegangenen Ansprüche,
**dadurch gekennzeichnet, dass**
die Auswahl eines der ersten Bedienelemente (2) nach einem vorgebbaren vorgegebenen Zeitabschnitt automatisch löschbar ist.

9. Armlehnenvorrichtung (1) nach einem der vorangegangenen Ansprüche,
**dadurch gekennzeichnet, dass**
eine Erkennungseinrichtung (8) vorgesehen ist, mittels welcher die Betätigung eines der ersten Bedienelemente (2) erkennbar ist und wobei die Erkennungseinrichtung (8) ein Signal erzeugt, welches dem betätigten ersten Bedienelement (2) zuordenbar ist.

10. Armlehnenvorrichtung (1) nach Anspruch 9,
**dadurch gekennzeichnet, dass**
mittels der Erkennungseinrichtung (8) das erzeugte Signal an eine Zuordnungseinrichtung (9) übermittelbar ist und mittels der Zuordnungseinrichtung (9) dem betätigten ersten Bedienelement (2) eine Fahrzeugfunktion (14) zuordenbar ist.

11. Armlehnenvorrichtung (1) nach Anspruch 10,
**dadurch gekennzeichnet, dass**
eine Steuereinrichtung (10) vorgesehen ist, mittels welcher abhängig von dem betätigten ersten Bedienelement (2) mit der zugeordneten Fahrzeugfunktion (14) bei einer Betätigung des mindestens einen zweiten Bedienelements (3) gemäß einem vorgebbaren oder vorgegebenen Schema die Fahrzeugfunktion (14) einstellbar ist.

12. Armlehnenvorrichtung (1) nach Anspruch 11,
**dadurch gekennzeichnet, dass**
die Steuereinrichtung (10) zumindest signaltechnisch mit der Zuordnungseinrichtung (9), dem mindestens einen zweiten Bedienelement (3) und den jeweiligen Aktuatoren (15) zur Einstellung der Fahrzeugfunktion (14) verbunden ist.

## Claims

1. Armrest device (1) for utility vehicle seats, wherein the armrest device (1) has a plurality of first control elements (2) and at least two second control elements (3), wherein
by means of selecting and actuating one of the first control elements (2) which is arranged on an upper surface (4) of the armrest device (1), seen in a height direction (H), a vehicle function (14) can be assigned to the selected first control element (2), and by means of actuating at least one second control element (3), which is arranged on a side surface (5) of the armrest device (1) and is connected at least by means of a signal to the selected first control element (2), the vehicle function (14) is adjustable.

2. Armrest device (1) according to claim 1,
**characterised in that**
the at least two second control elements (3) are arranged on the side surface (5) of the armrest device (1) which faces the utility vehicle seat.

3. Armrest device (1) according to claim 1,
**characterised in that**
the at least two second control elements (3) are arranged on the side surface (5) of the armrest device (1) which faces away from the utility vehicle seat.

4. Armrest device (1) according to claim 1 or claim 2 or claim 3,
**characterised in that**
the at least two second control elements (3) are differentiated at least haptically from one another.

5. Armrest device (1) according to claim 4,
**characterised in that**
the at least two second control elements (3) are arranged on a side surface (5) facing the utility vehicle seat and/or on a side surface (5) facing away from the utility vehicle seat.

6. Armrest device (1) according to any of the preceding claims,
**characterised in that**
at least the first control elements (2) each have backlighting, it being possible to activate the backlighting of the first control element (2) when the first control element (2) is actuated.

7. Armrest device (1) according to any of the preceding claims,
**characterised in that**
at least one third control element (7) is arranged on a front surface (6) of the armrest device, seen in the longitudinal direction (L) of the utility vehicle seat.

8. Armrest device (1) according to any of the preceding claims,
**characterised in that**
the selection of one of the first control elements (2) can be cancelled automatically after a predeterminable predetermined period of time.

9. Armrest device (1) according to any of the preceding claims,
**characterised in that**
a detection device (8) is provided, by means of which the actuation of one of the first control elements (2) can be detected and wherein the detection device (8) generates a signal which can be assigned to the actuated first control element (2).

10. Armrest device (1) according to claim 9,
**characterised in that**
by means of the detection device (8) the signal generated can be transmitted to an assignment device (9) and by means of the assignment device (9) a vehicle function (14) can be assigned to the actuated first control element (2).

11. Armrest device (1) according to claim 10,
**characterised in that**
a control device (10) is provided by means of which, depending on the actuated first control element (2) with the assigned vehicle function (14), the vehicle function (14) can be adjusted on actuation of the at least one second control element (3) according to a predeterminable or predetermined scheme.

12. Armrest device (1) according to claim 11,
**characterised in that**
the control device (10) is connected at least by means of a signal to the assignment device (9), the at least one second control element (3) and the respective actuators (15) for adjusting the vehicle function (14).

## Revendications

1. Dispositif d'accoudoir (1) pour sièges de véhicules utilitaires, le dispositif d'accoudoir (1) présentant une pluralité de premiers éléments de commande (2) et au moins deux deuxièmes éléments de commande (3), dans lequel
au moyen d'une sélection et d'un actionnement de l'un des premiers éléments de commande (2) qui est disposé sur une surface supérieure (4) du dispositif d'accoudoir (1), vu dans la direction de la hauteur (H), une fonction de véhicule (14) est attribuable au premier élément de commande sélectionné (2), et au moyen d'un actionnement d'au moins un deuxième élément de commande (3) qui est disposé sur une surface latérale (5) du dispositif d'accoudoir (1) et qui présente au moins une connexion par signal avec le premier élément de commande sélectionné (2), la fonction de véhicule (14) est ajustable.

2. Dispositif d'accoudoir (1) selon la revendication 1,
**caractérisé par le fait que**
les au moins deux deuxièmes éléments de commande (3) sont disposés sur la surface latérale (5) du dispositif d'accoudoir (1) qui est tournée vers le siège de véhicule utilitaire.

3. Dispositif d'accoudoir (1) selon la revendication 1,
**caractérisé par le fait que**
les au moins deux deuxièmes éléments de commande (3) sont disposés sur la surface latérale (5) du dispositif d'accoudoir (1) qui est tournée à l'opposé du siège de véhicule utilitaire.

4. Dispositif d'accoudoir (1) selon l'une des revendications 1 ou 2 ou 3,
**caractérisé par le fait que**
les au moins deux deuxièmes éléments de commande (3) sont aptes à être différenciés l'un de l'autre au moins haptiquement.

5. Dispositif d'accoudoir (1) selon la revendication 4,
**caractérisé par le fait que**
les au moins deux deuxièmes éléments de commande (3) sont disposés sur une surface latérale (5) tournée vers le siège de véhicule utilitaire et/ou sur une surface latérale (5) tournée à l'opposé du siège de véhicule utilitaire.

6. Dispositif d'accoudoir (1) selon l'une des revendications précédentes,
**caractérisé par le fait que**
au moins les premiers éléments de commande (2) présentent chacun un rétro-éclairage, le rétro-éclairage du premier élément de commande (2) étant activable lors d'un actionnement d'un premier élément de commande (2).

7. Dispositif d'accoudoir (1) selon l'une des revendications précédentes,
**caractérisé par le fait que**
au moins un troisième élément de commande (7) est disposé sur une surface avant (6) du dispositif d'accoudoir, vu dans la direction longitudinale (L) du siège du véhicule utilitaire.

8. Dispositif d'accoudoir (1) selon l'une des revendications précédentes,
**caractérisé par le fait que**
la sélection de l'un des premiers éléments de commande (2) est effaçable automatiquement après un intervalle de temps prédéterminable prédéterminé.

9. Dispositif d'accoudoir (1) selon l'une des revendications précédentes,
**caractérisé par le fait que**
un dispositif de détection (8) est prévu, au moyen duquel l'actionnement de l'un des premiers éléments de commande (2) est détectable et dans lequel le dispositif de détection (8) génère un signal, lequel est attribuable au premier élément de commande (2) actionné.

10. Dispositif d'accoudoir (1) selon la revendication 9,
**caractérisé par le fait que**
au moyen du dispositif de détection (8), le signal généré est apte à être transmis à un dispositif d'attribution (9) et au moyen du dispositif d'attribution (9) une fonction de véhicule (14) est attribuable au premier élément de commande (2) actionné.

11. Dispositif d'accoudoir (1) selon la revendication 10,
**caractérisé par le fait que**
un dispositif de commande (10) est prévu, au moyen duquel, en fonction du premier élément de commande (2) actionné avec la fonction de véhicule (14) attribuée, la fonction de véhicule (14) est ajustable lors d'un actionnement du dit au moins un deuxième élément de commande (3) selon un schéma prédéterminable ou prédéterminé.

12. Dispositif d'accoudoir (1) selon la revendication 11,
**caractérisé par le fait que**
le dispositif de commande (10) est connecté au moins par signal au dispositif d'attribution (9), audit au moins un deuxième élément de commande (3) et aux actionneurs respectifs (15) pour l'ajustement de la fonction de véhicule (14).
